# EUROPEAN PATENT SPECIFICATION

(11) **EP 4 494 957 B1**
(45) Date of publication and mention of the grant of the patent: **29.10.2025**
(21) Application number: 23187087.4
(22) Date of filing: 21.07.2023
(51) Int. Cl.: B60W 30/02, B60Q 3/70, B60W 50/00, B60W 50/14, B60W 50/16, B60Q 9/00

(54) **METHOD AND APPARATUS FOR REDUCING A RISK OF MOTION SICKNESS**
VERFAHREN UND VORRICHTUNG ZUR VERRINGERUNG DES RISIKOS VON REISEKRANKHEIT
PROCÉDÉ ET APPAREIL POUR RÉDUIRE LE RISQUE DE MAL DES TRANSPORTS

(43) Date of publication of application: 22.01.2025
(73) Proprietor: TOYOTA JIDOSHA KABUSHIKI KAISHA, Toyota-shi, Aichi-ken, 471 8571 (JP)
(72) Inventor: CACCIA DOMINIONI, Giancarlo, 1140 BRUSSELS (BE)
(74) Representative: Cabinet Beau de Loménie

(56) References cited:
- EP-A1- 3 995 340
- WO-A1-2021/116550
- DE-A1- 102021 201 579
- DE-B3- 102020 111 974
- US-A1- 2022 024 459
- KUIPER OUREN X ET AL: "Knowing what's coming: Anticipatory audio cues can mitigate motion sickness", APPLIED ERGONOMICS, BUTTERWORTH SCIENTIFIC LTD, GUILDFORD, GB, vol. 85, 6 February 2020 (2020-02-06), XP086079081, ISSN: 0003-6870, [retrieved on 20200206], DOI: 10.1016/J.APERGO.2020.103068

## Description

### BACKGROUND OF THE INVENTION

### 1. Field of the invention

The present invention relates to the field of vehicle assistance systems and, more particularly, to an apparatus and a method for reducing a risk of motion sickness from affecting an occupant of the vehicle.

### 2. Description of Related Art

The automation of vehicles represents a major challenge for automotive safety and driving optimization. In an effort to eliminate human error while driving a vehicle, Advanced Driver Assistance Systems (ADAS), also known as "driver assistance systems" have been designed to guide the driver and assist them during their journey by automating, improving, or adapting some or all of the tasks related to driving a vehicle. For example, document EP 3 995 340 A1 relates to a display control device configured to display a direction of a predicted acceleration of the vehicle.

The driver assistance systems generally rely on sensors to assist the driver throughout their journey and often communicate with a server to receive real-time information along the vehicle's path. Modern assistance driver systems also provide additional information related to the path, such as weather conditions, traffic congestion, duration, and disruptions on the road (diversions or lane closures, for example). The driver assistance system can also be configured to provide information, including regulatory indications, such as speed limits or the presence of checkpoints.

Driver assistance may further encompass secondary tasks such as location finding and obstacle detection. In particular, it enables the anticipation of potential collisions, such as with stationary objects (traffic barriers, signs, or trees, for example) or with moving objects like other vehicles.

Accordingly, driver assistance systems contribute to user distraction which leads them to no longer be aware of the route to be travelled by the vehicle.

One significant issue that arises with automated driving is the risk of passengers experiencing motion sickness due to their engagement in other activities that may prevent them from predicting the vehicle's motion. When there is a discrepancy between the expected and actual motion caused by the vehicle, both drivers and passengers can suffer from motion sickness. More precisely, motion sickness occurs when the central nervous system receives conflicting signals from various sensory systems, including the inner ear, eyes, skin pressure receptors, and muscle/joint sensory receptors.

Symptoms of motion sickness generally include nausea, dizziness, headaches, sweating and/or vomiting. It may become dangerous for the occupant's health and safety if they have to take control of the vehicle since the driver will not be in full physical control at the time.

Despite its prevalence, motion sickness poses a significant challenge for car manufacturers. Several solutions focus on reducing the symptoms of motion sickness in vehicles by displaying changing horizons according to measured vehicle's movements. As a result, the passengers remain in an uncomfortable state which can be more or less severe depending on the person. Thus, there is currently a lack of reliable and efficient methods to accurately reducing a risk of motion sickness from affecting an occupant in a moving vehicle.

### SUMMARY

The object of the present invention is to at least substantially address the aforementioned drawbacks. In this respect, the aim of the invention is to provide anticipatory cues that inform in advance the occupant(s) (or passenger(s)) of the vehicle, consciously and/or unconsciously, about its upcoming movements and thus reducing the risk of motion sickness from affecting the occupant(s).

The present invention relates to a method for reducing a risk of motion sickness from affecting an occupant in a moving vehicle, the method comprising:
- receiving trajectory data representative of a trajectory to be travelled by the vehicle over a predetermined distance;
- predicting at least one acceleration to which the vehicle will be subjected while travelling along said trajectory; and
- providing information representative of at least the magnitude of the predicted at least one acceleration to the occupant as at least one of haptic signals and audio signals, a predetermined time before occurrence of the predicted at least one acceleration,
wherein:
- the haptic signals comprise a vibration of control means configured to control the acceleration of the vehicle and/or comprise increasing a resistance to a movement of the control means; and
- the information provided to the occupant further comprises a direction of the predicted at least one acceleration, the audio signals being louder when the predicted at least one acceleration is positive than when said acceleration is negative.

For conciseness, the method is referred to hereinafter as the risk reduction method.

As used herein, for conciseness and unless the context indicates otherwise, "a", "an", and "the" are intended to refer to "at least one" or "each" and to include plural forms as well. Conversely, generic plural forms include the singular. Further, the "predicted at least one acceleration" comprises one predicted acceleration or a plurality of predicted accelerations.

Further, for conciseness and unless the context indicates otherwise, the term "occupant" may refer to a single occupant of the vehicle or to a plurality of occupants of the vehicle, depending on the number of the passengers inside said vehicle.

According to the present invention, providing information representative of at least the magnitude of a predicted acceleration to be performed during the upcoming movement of the vehicle, alerts the occupant that such movement is about to occur and thus helps their central nervous system to match between the perceived and actual upcoming movement of the vehicle.

As this matching is done before the occurrence of such movement, the risk of motion sickness from affecting the occupant is reduced, or even eliminated. The control means refer to mechanisms that the occupant can manipulate to control the vehicle's acceleration, such as pedals or a gear lever. Of course, both positive and negative accelerations are associated with a same reference direction. Accordingly, the negative acceleration and the positive acceleration are in opposite directions.

Optionally, the trajectory data comprises at least one obstacle to be avoided by the vehicle and/or traffic condition over the predetermined distance.

An obstacle may be defined as any object or condition that may cause collision with the vehicle. The obstacle can be a stationary object (traffic barriers, signs, or trees, for example) or a moving object such as other vehicles.

Optionally, the information is further provided to the occupant as visual signals.

Optionally, the haptic signals comprise movement of said occupant's seat in the direction of the predicted at least one acceleration.

Providing the direction of the predicted acceleration is beneficial due to the human body's reliance on multiple sensory cues for perceiving motion. By considering this direction, it becomes possible to analyse how the occupant's body will move when the predicted acceleration occurs. This information can then be communicated to the occupant, helping for the alignment of the perceived motion with the actual motion of the vehicle.

Optionally, the haptic signals comprise a vibration of the occupant's seat.

Optionally, the haptic signals comprise a vibration of the floor that supports the occupant.

Optionally, the audio signals are emitted from a side of the vehicle corresponding to a starting point of the predicted at least one acceleration.

It should be also noted that the direction of the predicted at least one acceleration corresponds to the direction of the movement of the occupant's seat.

The starting point refers then to the beginning of the acceleration vector corresponding to the predicted at least one acceleration.

Optionally, the audio signals include an artificial acceleration or an artificial deceleration sound.

Optionally, the audio signals include an audio speech.

Optionally, the visual signals comprise a display of a horizon line and/or a vertical line at an angle depending on a direction of the predicted at least one acceleration.

Optionally, the visual signals comprise a display of textual information.

Optionally, the visual signals comprise a display of at least one figure which is static or mobile, the speed of the scrolling of said mobile at least one figure being a function of the magnitude of the predicted at least one acceleration.

Optionally, the visual signals are displayed on an on-vehicle screen and/or on the road of the trajectory to be travelled and/or on the windscreen of the vehicle and/or on a screen of a portable terminal.

The term "portable terminal" refers to an electronic apparatus that is designed to be carried or moved from one place to another. Examples of portable devices include smartphones, tablets or laptops.

The visual signals can also be displayed on the road ahead of and/or behind the moving vehicle. This allows the occupant of the vehicle, whether their field of vision is towards the front or the rear side of the vehicle, to read the information that is representative of at least the magnitude of the predicted acceleration. In this way, the occupant can be alerted to an upcoming movement of the vehicle, regardless of the direction they are looking in.

To this end, the visual signals can be projected onto the road by using for example well-known optical projection techniques to superimpose the visual information on the road, ensure that the information is properly aligned with the road and appears in the correct perspective to the occupant. Such projection reduces the need for the occupant and especially the driver to look away from the road and thus enhances the driving safety.

Optionally, the visual signals are displayed overlapping or adjacent to the displayed trajectory to be travelled by the vehicle.

Displaying the information that is representative of at least the magnitude of the predicted acceleration and the trajectory to be travelled by the vehicle, whether superimposed or arranged side by side (adjacent), provide additional contextual information to the occupant that enhances its understanding of the trajectory to be travelled.

Optionally, the predetermined time is greater than or equal to 0.5 seconds.

To mitigate the impact of motion sickness on the occupant of the vehicle, the information representing at least the magnitude of the predicted acceleration(s) is provided to them prior to its occurrence. The predetermined time is then selected to allow sufficient awareness for the vehicle occupant regarding the upcoming vehicle movement, thus reducing the risk of motion sickness from affecting the occupant. In other words, the information is not provided in real-time, but in anticipation of real-time. For example, the predetermined time may also be equal to 1 second before the upcoming movement.

Optionally, the predetermined distance is lower than or equal to 100 meters.

To expedite calculation and avoid delays in delivering results, it is beneficial to utilize a restricted dataset. Thus, the size of the collected trajectory data may be limited to ensure faster processing and prompt provision of the information representing at least the magnitude of the predicted acceleration. To this end, collecting the trajectory data over a short distance, such as 100 meters or less is advantageous to constrain the dataset size.

The present invention further relates to a computer program set including instructions which, when the program is executed by a device as described hereafter, cause the device to carry out the steps of the above-described computer-implemented method.

This program set can use any programming language and take the form of source code, object code, or a code intermediate between source code and object code, such as a partially compiled form or any other desirable form.

The present invention further relates to an apparatus for reducing a risk of motion sickness from affecting an occupant in a moving vehicle, the apparatus comprising:
- a receiving module configured to receive trajectory data representative of a trajectory to be travelled by the vehicle over a predetermined distance;
- a predicting module configured to predict at least one acceleration to which the vehicle will be subjected while traveling along said trajectory; and
- an information module configured to provide information representative of at least the magnitude of the predicted at least one acceleration as at least of haptic signals and audio signals, a predetermined time before the occurrence of the predicted at least one acceleration,
wherein:
- the haptic signals comprise a vibration of control means configured to control the acceleration of the vehicle and/or comprise increasing a resistance to a movement of the control means; and
- the information provided to the occupant further comprises a direction of the predicted at least one acceleration, the audio signals being louder when the predicted at least one acceleration is positive than when said acceleration is negative.

The apparatus referred to hereinafter as the risk reduction apparatus, may be configured to carry out the above-mentioned risk reduction method and may have part or all of the above-described features. The risk reduction apparatus may have the hardware structure of a computer.

The present invention also relates to a vehicle comprising an apparatus for reducing a risk of motion sickness, as described above.

The term "vehicle" may be directed to an apparatus capable of transporting people from one location to another, such as a car or a motorcycle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a block diagram of a risk reduction apparatus according to an embodiment of the present invention; and
- Fig. 2 is a flowchart of a driver assistance method according to an embodiment of the present invention.

### DETAILED DESCRIPTION OF EMBODIMENTS

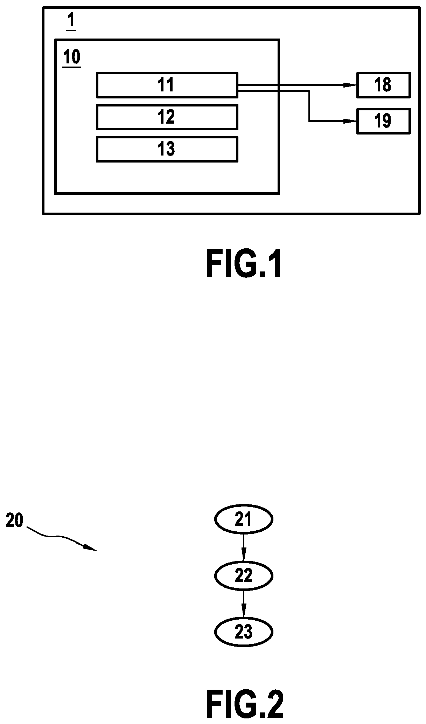

Figure 1 shows a block diagram of a risk reduction apparatus 10 comprising a receiving module 11, a predicting module 12, and an information module 13 according to embodiments of the present invention. The risk reduction apparatus 10 may be located inside a vehicle 1 which may be, without limitation, autonomous or semi-autonomous vehicles.

Alternatively, the risk reduction apparatus 10 may be partially or totally located outside the vehicle 1. As a first example, functions of the receiving module 11, the predicting module 12 and the information module 13 are executed via cloud computing. As a second example, only functions of the receiving module 11 and the predicting module 12 are executed via cloud computing. Accordingly, the functions of the information module 13 are then executed inside the vehicle 1.

The risk reduction apparatus 10 may be configured to reduce a risk of motion sickness from affecting an occupant in the vehicle 1 when it is in motion. To this end, the risk reduction apparatus 10 provides anticipatory cues that inform in advance the occupant (or passenger) of the vehicle 1, consciously and/or unconsciously, about its upcoming movements and thus reduces the risk of motion sickness from affecting the occupant.

Such vehicle 1 may be directed to an apparatus capable of transporting people from one location to another, such as a car or a motorcycle, and may be categorized into different levels based on the extent of automation and human involvement in the driving tasks.

The risk reduction apparatus 10 may comprise an electronic circuit, a processor (shared, dedicated, or group), a combinational logic circuit, a memory that executes one or more software programs, and/or other suitable components that provide the described functionality. In other words, the risk reduction apparatus 10 may be a computer device. The driver assistance apparatus 10 may be connected to a memory, which may store data, e.g., at least one computer program, which, when executed, carries out the risk reduction method according to the present invention.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk.

Alternatively, the memory can be an integrated circuit in which the program is incorporated, the circuit being adapted to execute the driver assistance method or to be used in its execution.

The receiving module 11 is a module for receiving trajectory data representative of a trajectory to be travelled by the vehicle 1 over a predetermined distance. The receiving module 11 may receive the trajectory data from sensors 18 such as ultrasonic sensor, radar sensor, or LiDAR sensor. The sensor 18 may also be a camera allowing for object recognition and lane detection. These data then represent the vehicle's surroundings and may be used in combination with other sensors 19, illustrated in Figure 1, as GPS system (for "Global Positioning Systems") that is configured to receive information on the location of the vehicle 1 and information about the trajectory to be travelled by the vehicle 1. Each sensor 18 or 19 may be an on-vehicle sensor or a part of a structure outside the vehicle 1 and that is able to communicate with the vehicle 1.

The vehicle's surroundings may be defined as the environment in which the vehicle 1 is travelling. It may be a predetermined area of the trajectory to be travelled and thus comprises the physical space and obstacles around the vehicle 1.

In particular, the obstacles that may be encountered on the trajectory to be travelled by the vehicle 1 may be stationary obstacles or moving obstacles. The stationary obstacles are fixed or immobile in the vehicle's surroundings, such as parked cars, traffic barriers, road signs, buildings, or trees. While these stationary obstacles are not currently obstructing the vehicle's trajectory, they have the potential to become obstacles that may cause a collision with the moving vehicle 1 if it approaches them too closely or deviates from its intended trajectory.

The moving obstacles are in motion within the vehicle's surroundings, including other vehicles, pedestrians, cyclists, or animals. These moving obstacles have the potential to intersect with the vehicle's trajectory and create a collision if their trajectories converge.

Avoiding these moving obstacles causes the vehicle 1 to accelerate or decelerate and possibly in a specific direction. Such movement may cause motion sickness to the occupant due to their engagement in other activities during this movement. Thus, the trajectory data may comprise the potential obstacles and their location on the trajectory to be travelled by the vehicle 1 in order to prevent a risk of motion sickness from affecting the occupant when avoiding these obstacles.

The trajectory data may then be collected by one or a plurality of the sensors 18 so that it (they) can provide information about the vehicle's surroundings over a predetermined distance of the trajectory to be travelled by the vehicle 1. The predetermined distance may be lower or equal to 100 meters in order to limit the size of the collected trajectory data and thus ensuring faster processing of these data and increasing the accuracy of obstacle detection.

The receiving module 11 may be implemented as software running on the risk reduction apparatus 10 or may be implemented partially or fully as a hardware element of the risk reduction apparatus 10.

The predicting module 12 is a module for predicting at least one acceleration to which the vehicle 1 will be subjected while travelling along said trajectory. The prediction of the at least one acceleration is defined based on the trajectory data from the receiving module 11. The predicting module 12 may be implemented as software running on the risk reduction apparatus 10 or may be implemented partially or fully as a hardware element of the risk reduction apparatus 10. In particular, the risk reduction apparatus 10 may comprise a program that includes both the receiving module 11 and the predicting module 12. Alternatively, the receiving module 11 may be realized as an independent program (in particular, beside a program forming the predicting module 12).

The information module 13 is a module for providing information representative of at least the magnitude of the predicted at least one acceleration, a predetermined time before the occurrence of the predicted at least one acceleration. In other words, the information representing at least the magnitude of the predicted acceleration(s) is provided to the occupant prior to its occurrence. The predetermined time is then selected to allow sufficient awareness for the vehicle's occupant regarding the upcoming vehicle movement, thus reducing the risk of motion sickness from affecting the occupant. Thus, the information is not provided in real-time. As an example, the predetermined time may also be equal to 1 second before the upcoming movement.

The information provided to the occupant by the information module 13 may further comprise a direction of the predicted at least one acceleration. The direction as an information to the occupant is advantageous due to the human body's reliance on multiple sensory cues for perceiving motion. Accordingly, considering the direction of the predicted at least one acceleration allows to determine how the occupant's body will move when the predicted movement of the vehicle 1 occurs, in order to align the perceived motion by the occupant with the actual motion of the vehicle 1.

The information provided to the occupant may be in form of haptic signals and/or visual signals and/or audio signals.

For example, when at least the magnitude of the predicted at least one acceleration is provided by the information module 13, the information is in form of haptic signals that comprise a vibration of the occupant's seat and/or a vibration of the floor of the vehicle 1 that supports the occupant and/or a vibration of control means configured to control the acceleration of the vehicle 1.

In this case, i.e. when at least the magnitude is provided, the haptic signals may further or alternatively comprise increasing a resistance to movement of the control means, noting that the control means refer to mechanisms that the occupant is able to manipulate to control the vehicle's acceleration, such as pedals or a gear lever.

As another example, the greater the magnitude of the predicted acceleration is, the greater the vibration or the increase in resistance.

As another example, when the direction of the predicted at least one acceleration is provided by the information module 13 together with its magnitude, the haptic signals may comprise movement of the occupant's seat in the direction of the predicted at least one acceleration. The information may further or alternatively be provided in the form of audio signal emitted from a side of the vehicle 1 corresponding to a starting point of the predicted at least one acceleration.

The starting point refers then to the beginning of the acceleration vector corresponding to the predicted at least one acceleration.

Since at the magnitude and the direction are provided, the audio signals may include an artificial acceleration or an artificial deceleration sound. Alternatively, the audio signals are louder when the predicted at least one acceleration is positive than when said acceleration is negative.

Positive and negative accelerations are associated with a same reference direction. Accordingly, the negative acceleration and the positive acceleration are in opposite directions.

The information may further or alternatively be provided in the form of visual signals comprising a display of a horizon line and/or a vertical line at an angle depending on the direction of the predicted at least one acceleration.

In either case, the visual signals may also be a display of textual information and/or a display of at least one figure which is static or mobile, wherein the speed of the scrolling of said mobile at least one figure is function of the magnitude of the predicted at least one acceleration.

Such visual signals may be then displayed by the information module 13 on the vehicle screen and/or on the road of the trajectory to be travelled and/or on the windscreen of the vehicle 1 and/or on a screen of a portable terminal for example.

As defined above, the term "portable terminal" refers to an electronic apparatus that is designed to be carried or moved from one place to another, such as smartphones, tablets or laptops.

Further, in order to provide additional contextual information to the occupant and enhancing its understanding to the trajectory to be travelled, it is beneficial to superimpose or arrange side by side the information that is representative of at least the magnitude of the predicted acceleration and the trajectory to be travelled by the vehicle 1.

It should be noted that the information module 13 may be implemented as software running on the risk reduction apparatus 10. The information module 13 may also be implemented partially or fully on the driver risk reduction apparatus 10 as a hardware element of the risk reduction apparatus 10.

In particular, the risk reduction apparatus 10 may comprise together the receiving module 11, the predicting module 12, and the information module 13. Alternatively, the information module 13 may be realized as an independent program (in particular, beside a program forming both the predicting module 12 and the receiving module 11, or beside a program forming the predicting module 12 and beside a program forming the receiving module 11).

The tasks carried out by the risk reduction apparatus 10 are detailed hereinafter with respect to the corresponding risk reduction method, an embodiment of which is illustrated in Fig. 2.

Figure 2 is a flowchart of the risk reduction method 20 according to an embodiment of the present invention. The risk reduction method 20 is a method for reducing a risk of motion sickness from affecting the occupant in the vehicle 1. More precisely, in order to reduce the risk of motion sickness, the method 20 provides anticipatory cues that inform in advance the occupant of the vehicle 1, consciously and/or unconsciously, about upcoming movements of the vehicle 1.

The risk reduction method 20 comprises a step 21 of receiving, by the receiving module 11, the trajectory data representative of the trajectory to be travelled by the vehicle 1 over the predetermined distance.

The predetermined distance may be lower than or equal to 100 meters in order to limit the size of the collected trajectory data and thus ensuring faster processing of these data and in order to increase the accuracy of obstacle detection.

Such trajectory data are received from at least one sensor 18 and/or sensor 19 illustrated in Figure 1.

That is, the risk reduction method 20 further comprises a step 22 performed by the predicting module 12 to predict the at least one acceleration to which the vehicle 1 will be subjected while traveling along said trajectory.

Finally, the reduction risk method 20 further comprises a step 23 performed by the information module 13 to provide the information that is representative of at least the magnitude of the predicted at least one acceleration, a predetermined time before the occurrence of the predicted at least one acceleration.

The predetermined time is selected to allow sufficient awareness for the vehicle's occupant regarding the upcoming vehicle movement, thus reducing the risk of motion sickness from affecting the occupant. Thus, the information is not provided in real-time. As an example, the predetermined time may also be equal to 1 second before the upcoming movement.

The information provided to the occupant by the information module 13 may further comprise a direction of the predicted at least one acceleration. The direction as an information to the occupant is advantageous due to the human body's reliance on multiple sensory cues for perceiving motion. Accordingly, considering the direction of the predicted at least one acceleration allows to determine how the occupant's body will move when the predicted movement of the vehicle 1 occurs, in order to align the perceived motion by the occupant with the actual motion of the vehicle 1.

## Claims

1. A method for reducing a risk of motion sickness from affecting an occupant in a moving vehicle (1), the method comprising:
- receiving trajectory data representative of a trajectory to be travelled by the vehicle (1) over a predetermined distance;
- predicting at least one acceleration to which the vehicle (1) will be subjected while travelling along said trajectory; and
- providing information representative of at least the magnitude of the predicted at least one acceleration to the occupant as at least one of haptic signals and audio signals, a predetermined time before occurrence of the predicted at least one acceleration, wherein the method is **characterized in that**:
- the haptic signals comprise a vibration of control means configured to control the acceleration of the vehicle (1) and/or comprise increasing a resistance to a movement of the control means; and
- the information provided to the occupant further comprises a direction of the predicted at least one acceleration, the audio signals being louder when the predicted at least one acceleration is positive than when said acceleration is negative.

2. The method according to claim 1, wherein the trajectory data comprises at least one obstacle to be avoided by the vehicle (1) and/or traffic condition over the predetermined distance.

3. The method according to claims 1 or 2, wherein the information is further provided to the occupant as visual signals.

4. The method according to any of claim 1 to 3, wherein the haptic signals comprise movement of said occupant's seat in the direction of the predicted at least one acceleration.

5. The method according to any of claims 1 to 4, wherein the haptic signals comprise a vibration of the occupant's seat and/or a vibration of the floor that supports the occupant.

6. The method according to any of claims 1 to 5, wherein the audio signals are emitted from a side of the vehicle corresponding to a starting point of the predicted at least one acceleration.

7. The method according to any of claims 1 to 6, wherein the audio signals include an artificial acceleration or an artificial deceleration sound.

8. The method according to any of claims 1 to 7, wherein the audio signals include an audio speech.

9. The method according to any of claims 1 to 8 in combination with claim 3, wherein the visual signals comprise a display of a horizon line and/or a vertical line at an angle depending on a direction of the predicted at least one acceleration.

10. The method according to any of claims 1 to 9 in combination with claim 3, wherein the visual signals comprise a display of textual information and/or at least one figure which is static or mobile, the speed of the scrolling of said mobile at least one figure being a function of the magnitude of the predicted at least one acceleration.

11. The method according to claim 10, wherein the visual signals are displayed on an on-vehicle screen and/or on the road of the trajectory to be travelled and/or on the windscreen of the vehicle and/or on a screen of a portable terminal.

12. The method according to claim 10 or 11, wherein the visual signals are displayed overlapping or adjacent to the displayed trajectory to be travelled by the vehicle (1).

13. The method according to any of claims 1 to 12, wherein the predetermined time is greater than or equal to 0.5 seconds.

14. The method according to any of claims 1 to 13, wherein the predetermined distance is lower than or equal to 100 meters.

15. An apparatus (10) for reducing a risk of motion sickness from affecting an occupant in a moving vehicle (1), the apparatus comprising:
- a receiving module (11) configured to receive trajectory data representative of a trajectory to be travelled by the vehicle (1) over a predetermined distance;
- a predicting module (12) configured to predict at least one acceleration to which the vehicle (1) will be subjected while traveling along said trajectory; and
- an information module (13) configured to provide information representative of at least the magnitude of the predicted at least one acceleration as at least one of haptic signals and audio signals, a predetermined time before the occurrence of the predicted at least one acceleration,
wherein the apparatus is **characterized in that**:
- the haptic signals comprise a vibration of control means configured to control the acceleration of the vehicle (1) and/or comprise increasing a resistance to a movement of the control means; and
- the information provided to the occupant further comprises a direction of the predicted at least one acceleration, the audio signals being louder when the predicted at least one acceleration is positive than when said acceleration is negative.

16. A vehicle (1) comprising an apparatus (10) for reducing a risk of motion sickness according to claim 15.

17. A computer program set including instructions which, when the program is executed by the apparatus of claim 15, cause the apparatus to carry out the steps of the method of any one of claims 1 to 14.

## Patentansprüche

1. Verfahren zum Verringern des Risikos, dass ein Insasse in einem sich bewegenden Fahrzeug (1) von Reisekrankheit betroffen wird, das Verfahren umfassend:
- Empfangen von Streckendaten, die repräsentativ für eine von dem Fahrzeug (1) über eine vorbestimmte Entfernung zu fahrende Strecke sind;
- Vorhersagen mindestens einer Beschleunigung, der das Fahrzeug (1) während eines Fahrens entlang der Strecke ausgesetzt sein wird; und
- Bereitstellen von Informationen, die repräsentativ für mindestens die Größe der vorhergesagten mindestens einen Beschleunigung sind, an den Insassen in Form von haptischen Signalen und/oder Audiosignalen eine vorbestimmte Zeit vor dem Auftreten der vorhergesagten mindestens einen Beschleunigung,
wobei das Verfahren **dadurch gekennzeichnet ist, dass**:
- die haptischen Signale eine Vibration von Steuereinrichtungen umfassen, die konfiguriert sind, um die Beschleunigung des Fahrzeugs (1) zu steuern, und/oder ein Erhöhen des Widerstands gegen eine Bewegung der Steuereinrichtungen umfassen; und
- die an den Insassen bereitgestellten Informationen ferner eine Richtung der vorhergesagten mindestens einen Beschleunigung umfassen, wobei die Audiosignale lauter sind, wenn die vorhergesagte mindestens eine Beschleunigung positiv ist, als wenn die Beschleunigung negativ ist.

2. Verfahren nach Anspruch 1, wobei die Streckendaten mindestens ein von dem Fahrzeug (1) zu umfahrendes Hindernis und/oder den Verkehrszustand über die vorbestimmte Entfernung umfassen.

3. Verfahren nach Anspruch 1 oder 2, wobei die Informationen dem Insassen ferner als visuelle Signale bereitgestellt werden.

4. Verfahren nach einem der Ansprüche 1 bis 3, wobei die haptischen Signale eine Bewegung des Insassensitzes in der Richtung der vorhergesagten mindestens einen Beschleunigung umfassen.

5. Verfahren nach einem der Ansprüche 1 bis 4, wobei die haptischen Signale eine Vibration des Insassensitzes und/oder eine Vibration des Bodens, der den Insassen trägt, umfassen.

6. Verfahren nach einem der Ansprüche 1 bis 5, wobei die Audiosignale von einer Seite des Fahrzeugs emittiert werden, die einem Ausgangspunkt der vorhergesagten mindestens einen Beschleunigung entspricht.

7. Verfahren nach einem der Ansprüche 1 bis 6, wobei die Audiosignale einen künstlichen Beschleunigungs- oder einen künstlichen Abbremston beinhalten.

8. Verfahren nach einem der Ansprüche 1 bis 7, wobei die Audiosignale eine Audiosprache beinhalten.

9. Verfahren nach einem der Ansprüche 1 bis 8 in Kombination mit Anspruch 3, wobei die visuellen Signale eine Anzeige einer Horizontlinie und/oder einer vertikalen Linie in einem Winkel umfassen, der von einer Richtung der vorhergesagten mindestens einen Beschleunigung abhängig ist.

10. Verfahren nach einem der Ansprüche 1 bis 9, in Kombination mit Anspruch 3, wobei die visuellen Signale eine Anzeige von Textinformationen und/oder mindestens einer Figur umfassen, die statisch oder beweglich ist, wobei die Geschwindigkeit des Scrollens der mobilen mindestens einen Figur von einer Größe der vorhergesagten mindestens einen Beschleunigung abhängt.

11. Verfahren nach Anspruch 10, wobei die visuellen Signale auf einem Bildschirm in dem Fahrzeug und/oder auf der Straße der zu fahrenden Strecke und/oder auf der Frontscheibe des Fahrzeugs und/oder auf einem Bildschirm eines tragbaren Endgeräts angezeigt werden.

12. Verfahren nach Anspruch 10 oder 11, wobei die visuellen Signale überlappend oder angrenzend an die angezeigte, von dem Fahrzeug (1) zu fahrende Strecke angezeigt werden.

13. Verfahren nach einem der Ansprüche 1 bis 12, wobei die vorbestimmte Zeit größer als oder gleich wie 0,5 Sekunden ist.

14. Verfahren nach einem der Ansprüche 1 bis 13, wobei die vorgegebene Entfernung weniger als oder gleich wie 100 Meter ist.

15. Vorrichtung (10) zum Verringern des Risikos, dass ein Insasse in einem sich bewegenden Fahrzeug (1) von Reisekrankheit betroffen wird, die Vorrichtung umfassend:
- ein Empfangsmodul (11), das konfiguriert ist, um Streckendaten zu empfangen, die repräsentativ für eine von dem Fahrzeug (1) über eine vorbestimmte Entfernung zu fahrende Strecke sind;
- ein Vorhersagemodul (12), das konfiguriert ist, um mindestens eine Beschleunigung vorherzusagen, der das Fahrzeug (1) während eines Fahrens entlang der Strecke ausgesetzt sein wird; und
- ein Informationsmodul (13), das konfiguriert ist, um eine vorbestimmte Zeit vor dem Auftreten der vorhergesagten mindestens einen Beschleunigung Informationen, die repräsentativ für mindestens die Größe der vorhergesagten mindestens einen Beschleunigung sind, als mindestens eines von haptischen Signalen und Audiosignalen bereitzustellen,
wobei die Vorrichtung **dadurch gekennzeichnet ist, dass**:
- die haptischen Signale eine Vibration von Steuereinrichtungen umfassen, die konfiguriert sind, um die Beschleunigung des Fahrzeugs (1) zu steuern, und/oder ein Erhöhen des Widerstands gegen eine Bewegung der Steuereinrichtungen umfassen; und
- die an den Insassen bereitgestellten Informationen ferner eine Richtung der vorhergesagten mindestens einen Beschleunigung umfassen, wobei die Audiosignale lauter sind, wenn die vorhergesagte mindestens eine Beschleunigung positiv ist, als wenn die Beschleunigung negativ ist.

16. Fahrzeug (1), umfassend eine Vorrichtung (10) zum Verringern des Risikos von Reisekrankheit nach Anspruch 15.

17. Computerprogrammsatz, der Anweisungen beinhaltet, die wenn das Programm von der Vorrichtung nach Anspruch 15 ausgeführt wird, die Vorrichtung veranlassen, die Schritte des Verfahrens nach einem der Ansprüche 1 bis 14 durchzuführen.

## Revendications

1. Procédé pour réduire un risque que le mal des transports affecte un occupant dans un véhicule en mouvement (1), le procédé comprenant :
- la réception de données de trajectoire représentatives d'une trajectoire devant être parcourue par le véhicule (1) sur une distance prédéterminée ;
- la prédiction d'au moins une accélération à laquelle le véhicule (1) va être soumis tout en se déplaçant le long de ladite trajectoire ; et
- la fourniture d'une information représentative de au moins l'amplitude de ladite au moins une accélération prédite sur l'occupant sous la forme d'au moins un de signaux haptiques et de signaux audio, un temps prédéterminé avant l'apparition de ladite au moins une accélération prédite,
le procédé étant **caractérisé en ce que** :
- les signaux haptiques comprennent une vibration de moyens de commande configurés pour commander l'accélération du véhicule (1) et/ou comprennent l'augmentation d'une résistance à un mouvement des moyens de commande ; et
- l'information fournie à l'occupant comprend en outre une direction de ladite au moins une accélération prédite, les signaux audio étant plus forts quand ladite au moins une accélération prédite est positive que quand ladite accélération est négative.

2. Procédé selon la revendication 1, selon lequel les données de trajectoire comprennent au moins un obstacle devant être évité par le véhicule (1) et/ou une condition de circulation sur la distance prédéterminée.

3. Procédé selon les revendications 1 ou 2, selon lequel l'information est en outre fournie à l'occupant sous la forme de signaux visuels.

4. Procédé selon l'une quelconque des revendications 1 à 3, selon lequel les signaux haptiques comprennent un mouvement du siège dudit occupant dans la direction de ladite au moins une accélération prédite.

5. Procédé selon l'une quelconque des revendications 1 à 4, selon lequel les signaux haptiques comprennent une vibration du siège de l'occupant et/ou une vibration du plancher qui supporte l'occupant.

6. Procédé selon l'une quelconque des revendications 1 à 5, selon lequel les signaux audio sont émis depuis un côté du véhicule correspondant à un point de départ de ladite au moins une accélération prédite.

7. Procédé selon l'une quelconque des revendications 1 à 6, selon lequel les signaux audio comprennent un son d'accélération artificiel ou un son de décélération artificielle.

8. Procédé selon l'une quelconque des revendications 1 à 7, selon lequel les signaux audio comprennent un discours audio.

9. Procédé selon l'une quelconque des revendications 1 à 8 en combinaison avec la revendication 3, selon lequel les signaux visuels comprennent un affichage d'une ligne d'horizon et/ou d'une ligne verticale sous un angle qui dépend d'une direction de ladite au moins une accélération prédite.

10. Procédé selon l'une quelconque des revendications 1 à 9 en combinaison avec la revendication 3, selon lequel les signaux visuels comprennent un affichage d'information textuelle et/ou d'au moins une figure qui est statique ou mobile, la vitesse du défilement de ladite au moins une figure mobile étant une fonction de l'amplitude de ladite au moins une accélération prédite.

11. Procédé selon la revendication 10, selon lequel les signaux visuels sont affichés sur un écran à bord du véhicule et/ou sur la route de la trajectoire devant être parcourue et/ou sur le pare-brise du véhicule et/ou sur un écran d'un terminal portatif.

12. Procédé selon la revendication 10 ou 11, selon lequel les signaux visuels sont affichés en chevauchement avec ou de façon adjacente à la trajectoire affichée devant être parcourue par le véhicule (1).

13. Procédé selon l'une quelconque des revendications 1 à 12, selon lequel le temps prédéterminé est supérieur ou égal à 0,5 seconde.

14. Procédé selon l'une quelconque des revendications 1 à 13, selon lequel la distance prédéterminée est inférieure ou égale à 100 mètres.

15. Appareil (10) pour réduire un risque que le mal des transports affecte un occupant dans un véhicule en mouvement (1), l'appareil comprenant :
- un module de réception (11) configuré pour recevoir des données de trajectoire représentatives d'une trajectoire devant être parcourue par le véhicule (1) sur une distance prédéterminée ;
- un module de prévision (12) configuré pour prédire au moins une accélération à laquelle le véhicule (1) va être soumis tout en se déplaçant le long de ladite trajectoire ; et
- un module d'information (13) configuré pour fournir de l'information représentative d'au moins l'amplitude de ladite au moins une accélération prédite sous la forme d'au moins un de signaux haptiques et de signaux audio, un temps prédéterminé avant l'apparition de ladite au moins une accélération prédite,
l'appareil étant **caractérisé en ce que** :
- les signaux haptiques comprennent une vibration de moyens de commande configurés pour commander l'accélération du véhicule (1) et/ou comprennent l'augmentation d'une résistance à un mouvement des moyens de commande ; et
- l'information fournie à l'occupant comprend en outre une direction de ladite au moins une accélération prédite, les signaux audio étant plus forts quand ladite au moins une accélération prédite est positive que quand ladite accélération est négative.

16. Véhicule (1) comprenant un appareil (10) pour réduire un risque de mal des transports selon la revendication 15.

17. Ensemble de programme informatique comprenant des instructions qui, quand le programme est exécuté par l'appareil selon la revendication 15, amènent l'appareil à mettre en œuvre les étapes du procédé selon l'une quelconque des revendications 1 à 14.
